Europäisches Patentamt

European Patent Office

Office européen des brevets

(19)

(11) Numéro de publication : **0 317 546 B1**

(12) **FASCICULE DE BREVET EUROPEEN**

(45) Date de publication du fascicule du brevet :
18.09.91 Bulletin 91/38

(51) Int. Cl.⁵ : **F16L 37/08**

(21) Numéro de dépôt : 88870174.5

(22) Date de dépôt : 18.11.88

(54) **Système de raccord étanche résistant à la traction pour tuyaux à bouts lisses.**

(30) Priorité : 20.11.87 BE 8701321

(43) Date de publication de la demande :
24.05.89 Bulletin 89/21

(45) Mention de la délivrance du brevet :
18.09.91 Bulletin 91/38

(84) Etats contractants désignés :
BE DE ES FR GB IT NL

(56) Documents cités :
DE-A- 1 928 060
FR-A- 2 304 852
GB-A- 926 215
US-A- 3 637 239

(73) Titulaire : ETERNIT N.V.
Kuiermanstraat 1
B-2920 Kapelle-op-den-Bos (BE)
(84) Etats contractants désignés :
BE DE ES GB NL
Titulaire : ETEX
33, rue d'Artois
F-75008 Paris (FR)
(84) Etats contractants désignés :
FR IT

(72) Inventeur : De Preter, Marc
Duivebergen, 9
B-2850 Keerbergen (BE)

(74) Mandataire : Plucker, Guy et al
OFFICE KIRKPATRICK 4 Square de Meeûs
B-1040 Bruxelles (BE)

EP 0 317 546 B1

## Description

L'invention concerne un système de raccord étanche résistant à la traction pour tuyaux à bouts en substance lisses.

Le système de raccord conforme à l'invention peut être utilisé pour assurer une jonction résistant à la traction entre des éléments tubulaires faits de différentes sortes de matières comme, par exemple, le fibres-ciment, l'amiante-ciment, le métal, les matières plastiques organiques, les plastiques renforcés de fibres (notamment le polyester renforcé de fibres). Le système de raccord suivant l'invention peut être utilisé pour la réalisation de canalisations de transport de fluides liquides ou gazeux, mais également de solides en poudre ou en suspension.

Dans la description qui suit, il est fait plus particulièrement mention de tuyaux d'adduction d'eau en fibres-ciment. Toutefois, il ne s'agit que d'un exemple non limitatif et l'invention s'applique évidemment à la réalisation de toute canalisation composée de tuyaux à bouts lisses.

Lors de l'installation d'une telle canalisation, il est connu d'assembler les éléments tubulaires à l'aide de manchons de raccordement. Ainsi, les extrémités de deux tuyaux adjacents sont introduites dans un manchon de raccordement cylindrique dont le diamètre intérieur est légèrement supérieur au diamètre extérieur de l'extrémité des tuyaux. L'étanchéité entre le manchon de raccordement et les extrémités des tuyaux est assurée à l'aide d'une ou plusieurs bagues d'étanchéité élastiques. Il s'avère cependant que, par suite de la pression hydraulique interne à la conduite, les forces axiales produites tendent à séparer les éléments tubulaires adjacents. Or, comme la pression hydraulique dans les conduites d'adduction d'eau peut atteindre des valeurs de l'ordre de 1.500 KPa, les forces qui tendent à séparer les éléments tubulaires adjacents sont particulièrement élevées (plus spécialement dans les conduites de grand diamètre). Lorsque les tuyaux sont assemblés en droite ligne et enterrés, le sol environnant aide à prévenir les mouvements axiaux des tuyaux. Il est cependant nécessaire dans la plupart des cas et plus particulièrement dans les parties courbes et aux extrémités des conduites, de prévoir des raccords munis de dispositifs résistant à la traction.

De tels raccords résistant à la traction sont connus dans l'état actuel de la technique.

Un système de raccord résistant à la traction bien connu comprend un manchon cylindrique dans lequel on introduit les extrémités de deux éléments tubulaires adjacents ; la résistance à la traction est obtenue en insérant, par une ouverture ménagée dans le manchon, un câble d'acier, une baguette flexible en plastique ou une bande métallique, dans un espace annulaire constitué par deux gorges ménagées en vis-à-vis sur la surface interne du manchon et sur la surface externe du tuyau. L'étanchéité du raccord est obtenue par une bague élastique disposée entre le manchon et l'extrémité du tuyau, et plus proche du milieu du manchon que le câble ou la baguette qui assure la résistance à la traction.

Ce genre de raccord de tuyau présente toutefois un inconvénient important en ce qu'il est nécessaire de pratique une gorge près de l'extrémité des tuyaux. La coupe transversale du tuyau au niveau de la gorge constitue ainsi la section critique pour le calcul de la force requise pour résister à la pression hydraulique interne, car en fait il n'y a pas de pression externe pour compenser cette pression interne. Il s'ensuit qu'un tuyau pourvu de ce type de raccord résistant à la traction doit être proportionnellement plus épais sur toute sa longueur qu'un tuyau standard résistant à la même pression. Il faut également noter que, sur chantier, l'insertion d'un câble d'acier (ou d'un autre élément flexible) dans l'espace annulaire prévu pour le recevoir, est souvent une opération très malaisée. De plus, en cas d'utilisation d'un tel raccord, il est difficile, voire pratiquement impossible, de remplacer un tuyau défectueux.

Dans le brevet US-A-3637239, on trouve la description d'un système de raccord étanche résistant à la traction pour tuyaux à bouts en substance lisses. Le raccordement de deux éléments tubulaires est assuré par un manchon en substance cylindrique qui est symétrique par rapport au plan médian perpendiculaire à son axe. Dans chaque moitié de manchon est montée une bague d'étanchéité élastique qui est partiellement engagée dans une gorge annulaire ménagée à cet effet dans la face interne du manchon. Dans chaque moitié de manchon est ménagée en outre une seconde gorge annulaire entre la bague d'étanchéité et l'extrémité libre du manchon ; un anneau de sûreté fendu transversalement est engagé dans cette seconde gorge. Une gorge annulaire est également ménagée sur la périphérie extérieure de chaque élément de tuyau à raccorder. Les dimensions relatives des différentes parties de l'assemblage sont telles que lors de l'emboîtement de l'élément de tuyau dans le manchon, l'anneau de sûreté est dilaté et engagé dans la gorge annulaire du tuyau lorsque cette dernière arrive en regard de la gorge du manchon qui porte cet anneau de sûreté, rendant ainsi la connexion résistante à la traction.

Avec un système de raccord tel que décrit dans le brevet US-A-3637239, le raccordement de tuyaux est nettement plus facile qu'avec un système de raccordement dans lequel la résistance à la traction est obtenue par un câble ou un autre élément flexible engagé entre le tuyau et le manchon par une ouverture ménagée dans ce dernier. Toutefois, dans le système décrit dans le brevet US-A-3637239, rien n'est prévu pour pouvoir dégager un élément de tuyau hors du manchon dans lequel il a été emboîté et, dès lors, le remplacement d'un tuyau défectueux pose un problème très sérieux.

La demande de brevet DE-A-1928060 a pour objet un système de raccord qui, dans l'ensemble, est très semblable à celui décrit dans le brevet US-A-3637239. Toutefois, à chaque extrémité du manchon de raccordement, des évidements sont ménagés entre l'extrémité du manchon et la gorge dans laquelle est monté l'anneau de sûreté. Ces évidements, qui donnent accès aux extrémités libres de l'anneau de sûreté (anneau fendu), sont prévus pour permettre de dégager un élément de tuyau hors du manchon, en cas de nécessité (par exemple pour remplacer un tuyau défectueux). Lorsqu'une conduite est enterrée, les dits évidements facilitent cependant la pénétration de la terre entre l'élément de tuyau et le manchon, ce qui peut conduire à une obstruction complète de l'espace annulaire où est logé l'anneau de sûreté : dans un tel cas, le dégagement d'un élément de tuyau hors du manchon est souvent difficile.

De toute manière, pour le système de raccord décrit dans le DE-A-1928060, tout comme pour celui qui est décrit dans le brevet US-A-3637239, la gorge annulaire ménagée près de l'extrémité de l'élément de tuyau implique que celui-ci doit être plus épais sur toute sa longueur.

On connaît également un autre système de raccord résistant à la traction, dans lequel une bague de caoutchouc en "V" remplit à la fois les fonctions d'étanchéité et de résistance à la traction.

De tels raccords ne sont cependant utilisables que pour des pressions relativement faibles. Il faut également remarquer qu'il est encore nécessaire de ménager une gorge près de l'extrémité du tuyau, qui doit ici aussi être plus épais sur toute sa longueur.

L'invention a pour but de procurer un tel système de raccord conçu de telle manière que la gorge près de l'extrémité du tuyau ne nécessite plus l'emploi d'un tuyau plus épais sur toute sa longueur.

L'invention a aussi pour but de procurer un tel système de raccord qui facilite le raccordement de tuyaux et, en cas de nécessité, le remplacement d'un tuyau défectueux.

L'invention a pour objet un système de raccord étanche résistant à la traction pour tuyaux à bouts lisses, comprenant un manchon en substance cylindrique dans lequel sont reçus, par emboîtement, deux éléments tubulaires, des moyens pour rendre le raccord étanche et résistant à la traction et au moins une bague d'étanchéité disposée entre le manchon et chaque élément tubulaire emboîté. Chaque élément tubulaire est muni, à chacune de ses extrémités libres, d'un chanfrein tourné vers l'extérieur et est doté, sur sa surface externe, près de chacune de ses extrémités libres, d'une gorge circonférentielle ; cette gorge a une paroi de fond et deux parois latérales, la paroi de fond étant essentiellement lisse et parallèle à la surface externe de l'élément tubulaire, la paroi latérale qui est la plus proche de l'extrémité libre de l'élément tubulaire étant perpendiculaire à l'axe longitudinal du dit élément tubulaire, l'autre paroi latérale étant à configuration tronconique, en pente faible depuis le fond de la gorge jusqu'à la surface externe de l'élément tubulaire. Chaque moitié du manchon, lequel est symétrique par rapport au plan médian perpendiculaire à son axe longitudinal, est pourvue, sur sa surface interne, d'une gorge rectangulaire circonférentielle dont les parois latérales sont parallèles au dit plan médian ; cette gorge rectangulaire contient un anneau de sûreté à section rectangulaire fendu transversalement, lequel anneau, lorsqu'il n'est pas sollicité, a un diamètre interne qui est inférieur au diamètre interne du manchon et un diamètre externe qui est supérieur au diamètre interne du manchon mais inférieur au diamètre du fond de la gorge rectangulaire. Chaque moitié du manchon est dotée d'au moins une bague d'étanchéité élastique entre la gorge rectangulaire qui contient l'anneau de sûreté et l'extrémité du manchon. Les dimensions relatives des différentes parties du raccord sont telles que, lors de l'emboîtement d'un élément tubulaire dans le manchon, l'anneau de sûreté est appréhendé par le chanfrein de l'extrémité libre de l'élément tubulaire, puis est dilaté et engagé enfin, par effet d'élasticité, dans la gorge de l'élément tubulaire, et ce lorsque les deux gorges du manchon et de l'élément tubulaire se trouvent en vis-à-vis, rendant ainsi le raccord résistant à la traction.

Selon un mode de réalisation préféré, chaque bague d'étanchéité est partiellement insérée dans une gorge de forme appropriée ménagée à cet effet dans la face interne du manchon. Les bagues d'étanchéité sont normalement réalisées à partir d'un élastomère synthétique ou naturel.

Suivant un mode de réalisation particulier, les bagues d'étanchéité sont des joints de type "COMETE"® bien connu.

Le manchon ainsi que les éléments tubulaires peuvent être faits de diverses matières : fibres-ciment, (entre autres amiante-ciment), métal, matières plastiques, plastiques renforcés de fibres (par exemple polyester renforcé de fibres de verre).

L'anneau de sûreté peut également être fait de différents matériaux tels que : acier inoxydable, plastiques ou plastiques renforcés. Il est avantageux que l'anneau de sûreté présente une résistance au cisaillement au moins égale à celle du manchon et des éléments tubulaires.

Les termes "tuyaux à bouts lisses" sont utilisés ici pour faire la distinction entre des tuyaux de ce type et des tuyaux à bouts filetés ou des tuyaux à brides pour lesquels les systèmes de raccordement sont très différents. Même si,dans le système de raccordement suivant l'invention, les tuyaux à raccorder sont pourvus près de leurs extrémités d'une gorge circonférentielle ménagée sur leur périphérie extérieure, ces tuyaux sont néanmoins du type "à bouts lisses".

L'invention sera mieux comprise à l'aide de la description qui suit d'un exemple non limitatif et en comparaison avec l'état de la technique, ainsi que des figures annexées parmi lesquelles :

Fig. 1 est une coupe longitudinale partielle d'un raccord antérieur connu résistant à la traction,

Fig. 2 est une vue similaire à la Fig. 1 d'un autre joint résistant à la traction,

Fig. 3 est une coupe longitudinale partielle d'un système de raccord conforme à l'invention, et

Fig. 4 est une vue agrandie d'une coupe longitudinale partielle d'un système de raccord conforme à l'invention.

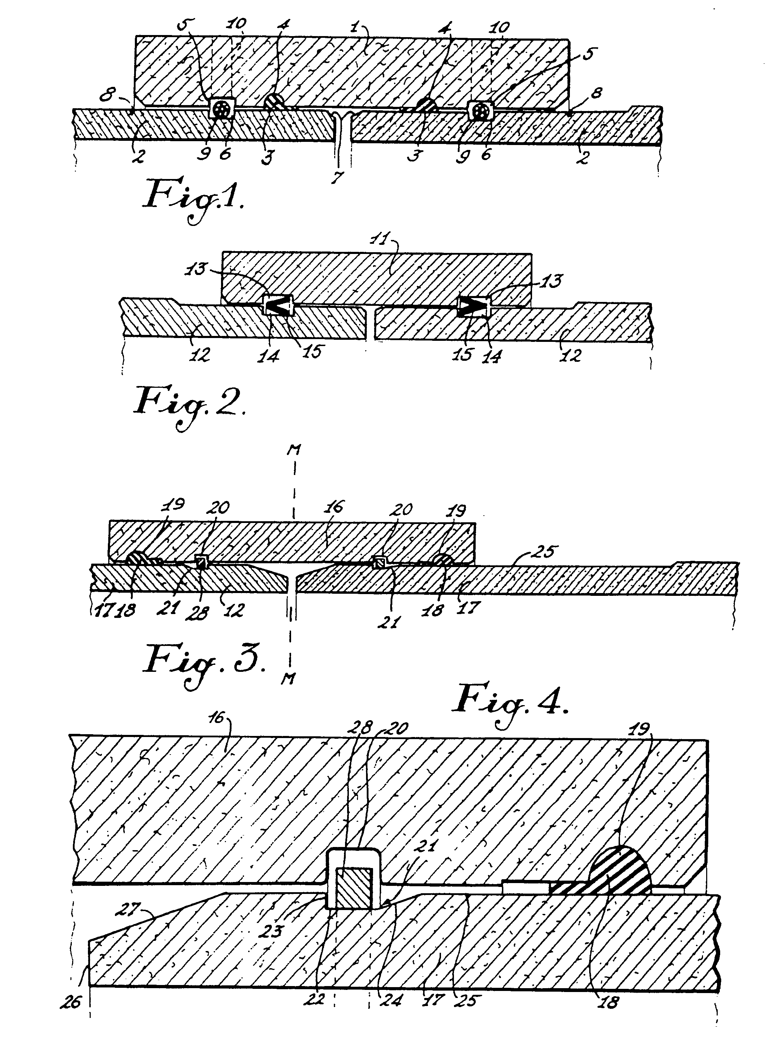

La Fig. 1 montre un raccord connu résistant à la traction consistant en un manchon 1 dans les deux extrémités duquel sont engagés des éléments tubulaires 2 en fibres-ciment. Entre l'élément tubulaire 2 emboîté et le manchon 1, on a prévu des bagues d'étanchéité 3 en caoutchouc qui, sont partiellement insérées dans les gorges 4 du manchon 1. Les bagues d'étanchéité 3 utilisées dans cet exemple sont du type "COMETE"®. Le manchon 1 est doté également de deux gorges 5 situées entre les extrémités libres et les gorges 4.

Sur chaque élément tubulaire 2 est également ménagée une gorge 6. Lors du montage d'un élément tubulaire 2 (avec une extrémité chanfreinée 7) dans le manchon 1, une marque d'assemblage 8 permet de régler la position relative de ces deux éléments de manière que la gorge 5 du manchon 1 et la gorge 6 de l'élément tubulaire 2 soient situées en vis-à-vis, formant ainsi un espace annulaire dans lequel un câble d'acier 9 peut être inséré par un trou 10 pratiqué tangentiellement dans le manchon 1. Le câble 9 assure la résistance à la traction du raccord et la solidarisation du tuyau 2 dans le manchon 1.

Il convient de noter que l'épaisseur du tuyau 2 sous la gorge 6 détermine la section critique du tuyau 2 pour la résistance à la pression interne, parce qu'à ce point précis il n'y a qu'une pression interne et pas de pression externe.

Comme expliqué auparavant, l'une des conséquences de l'utilisation de ce type de raccord résistant à la traction est que le tuyau 2 doit être plus épais sur toute sa longueur qu'un tuyau standard résistant à la même pression. Cet inconvénient est particulièrement gênant parce que, même avec des tuyaux standards en fibres-ciment qui résistent à la pression, les extrémités doivent être amincies pour que la section à emboîter soit lisse et de diamètre exact.

Par ailleurs, l'assemblage de tels raccords s'avère délicat parce que le câble d'acier 9 ne peut être introduit dans l'espace annulaire 5-6 que lorsque les gorges 5 et 6 sont exactement en vis-à-vis. Il est évident également que lorsque l'on utilise un raccord de ce type, la poussière, l'eau et la terre peuvent pénétrer entre l'élément tubulaire 2 et le manchon 1 jusqu'à la bague d'étanchéité 3 en remplissant complètement les gorges 5 et 6. Lorsqu'une conduite a séjourné un certain temps sous terre, il devient pratiquement impossible de défaire un raccord car le câble 9 ne peut être extrait de son espace annulaire. Pour cette raison, parmi d'autres, il est, avec un tel type de raccord, extrêmement difficile de remplacer un élément tubulaire 2 défectueux.

La Fig. 2 décrit le joint "TOSCHI" pour tuyaux qui comprend un double manchon de raccordement 11 réalisé à partir d'un tronçon de tuyau en fibres-ciment et destiné à accueillir par emboîtement deux éléments tubulaires 12. Sur la face interne du manchon 11, à égale distance des deux extrémités, deux gorges 13 sont façonnées. De la même façon, une gorge 14 est ménagée sur la face externe de chaque élément tubulaire 12.

Après assemblage des pièces, une bague d'étanchéité en "V" 15 se trouve insérée dans chacun des espaces annulaires formés par les gorges 13 et 14 qui se font face.

La bague d'étanchéité 15 devant remplir à la fois les fonctions d'étanchéité et de résistance à la traction, ce type de raccord n'est seulement envisageable que pour des canalisations travaillant à une pression hydraulique relativement faible.

Les Figs. 3 et 4 illustrent un système de raccord pour tuyaux à bouts lisses réalisé conformément à la présente invention.

Ce système de raccord consiste en un double manchon de raccordement 16 dans lequel sont reçus par emboîtement deux éléments tubulaires 17. Entre les éléments tubulaires 17 emboîtés et le manchon 16, on a également prévu des bagues d'étanchéité 18 en caoutchouc qui sont partiellement insérées dans les gorges 19 du manchon 16. Dans le présent exemple, les bagues d'étanchéité 18 sont du type "COMETE"®.

Dans le manchon 16, on a également prévu une paire de gorges rectangulaires 20 situées entre les gorges 19 et le milieu du manchon 16. Le manchon 16 est symétrique par rapport à son axe longitudinal et par rapport à un plan médian M-M perpendiculaire à cet axe longitudinal.

Chaque élément tubulaire 17 est muni sur sa face extérieure d'une gorge 21 disposée sur tout son pourtour, la dite gorge 21 ayant une paroi de fond 22 et deux parois latérales 23 et 24. La paroi de fond 22 est lisse et parallèle à la surface externe 25 de l'élément tubulaire 17. La paroi latérale 23 qui est la plus proche de l'extrémité libre 26 de l'élément tubulaire 17 est perpendiculaire à l'axe longitudinal de l'élément tubulaire 17. L'autre paroi latérale 24 est à configuration tronconique et en pente faible depuis le fond de la gorge 21 en direction de la surface externe 25 de l'élément tubulaire 17.

Les extrémités libres 26 de chaque élément tubulaire 17 sont munies d'un chanfrein 27 sur leur partie extérieure.

Dans la gorge 20 vient se loger un anneau de sûreté 28 en acier inoxydable qui est fendu tansversalement et est de section rectangulaire.

Lorsqu'il n'est pas sollicité (c'est-à-dire avant l'introduction de l'élément tubulaire 17 dans le manchon 16), l'anneau de sûreté 28 a un diamètre interne qui est inférieur au diamètre interne du manchon 16 et un diamètre externe qui est supérieur au diamètre interne du manchon 16, mais inférieur au diamètre du fond de la gorge 20.

De ce fait, l'anneau de sûreté 28 ne peut sortir de la gorge 20 mais peut se distendre vers l'extérieur.

Quand l'élément tubulaire 17 est inséré dans le manchon 16, l'anneau de sûreté 28 est appréhendé par le chanfrein 27 de l'élément tubulaire 17. Lorsque l'élément tubulaire 17 est inséré plus profondément dans le manchon 16, l'anneau de sûreté 28 est dilaté, puis vient s'engager dans la gorge 21 de l'élément tubulaire 17 au moment où la gorge 21 fait face à la gorge correspondante 20 du manchon 16. L'élément tubulaire 17 et le manchon 16 sont ainsi joints d'une manière résistante à la traction.

Le système de raccord conformé à la présente invention s'avère particulièrement avantageux à utiliser avec des conduites sous pression, par exemple pour l'adduction d'eau.

Contrairement au câble 9 utilisé pour le raccord montré à la Fig. 1, l'anneau de sûreté 28 du système de raccord conforme à l'invention est disposé dans la zone humide du raccord, c'est-à-dire qu'il est en contact direct avec l'eau véhiculée dans la canalisation.

La gorge 21 qui contient l'anneau de sûreté 28 n'a plus un effet négatif sur la résistance à la pression de la paroi de l'élément tubulaire 17 parce que l'anneau 28 est situé dans la zone humide et qu'à ce point précis, les surfaces interne et externe de la paroi de l'élément tubulaire 17 sont à la même pression.

Ceci permet une réduction significative de l'épaisseur de matière requise pour fabriquer toute la longueur du tuyau 17.

Le système de raccord conforme à l'invention permet également de déplacer le manchon 16 au delà de sa position normale par rapport aux éléments tubulaires 17. Ce déplacement est rendu possible par la forme tronconique de la paroi latérale 24 de la gorge 21. Le manchon 16 peut ainsi être complètement engagé autour d'un élément tubulaire 17, ce qui autorise le remplacement éventuel d'un tuyau 17.

Il s'agit là d'un avantage important que ne présentent pas les systèmes de raccord antérieurement connus.

**Revendications**

1. Système de raccord étanche résistant à la traction pour tuyaux à bouts lisses, comprenant un manchon (16) en substance cylindrique dans lequel sont reçus par emboîtement deux éléments tubulaires (17), des moyens pour rendre le raccord étanche et résistant à la traction et au moins une bague d'étanchéité (18) disposée entre le manchon (16) et chaque élément tubulaire (17) emboîté, dans lequel chaque élément tubulaire (17) est muni, à chacune de ses extrémités libres (26), d'un chanfrein (27) tourné vers l'extérieur et est doté sur sa surface externe (25) près de chacune de ses extrémités libres (26) d'une gorge (21) circonférentielle, ladite gorge (21) ayant une paroi de fond (22) et deux parois latérales (23, 24), la paroi de fond (22) étant essentiellement lisse et parallèle à la surface externe (25) de l'élément tubulaire (17), la paroi latérale (23) qui est la plus proche de l'extrémité libre (26) de l'élément tubulaire (17) étant perpendiculaire à l'axe longitudinal du dit élément tubulaire (17), l'autre paroi latérale (24) étant à configuration tronconique, en pente faible depuis le fond (22) de la gorge (21) jusqu'à la surface externe (25) de l'élément tubulaire (17), tandis que chaque moitié du manchon (16), lequel est symétrique par rapport au plan médian (M-M) perpendiculaire à son axe, est pourvue sur sa surface interne d'une gorge rectangulaire (20) circonférentielle dont les parois latérales sont parallèles au dit plan médian (M-M), cette gorge rectangulaire (20) contenant un anneau de sûreté (28) à section rectangulaire fendu transversalement, lequel anneau (28), lorsqu'il n'est pas sollicité, a un diamètre interne qui est inférieur au diamètre interne du manchon (16) et un diamètre externe qui est supérieur au diamètre interne du manchon (16) mais inférieur au diamètre du fond de la gorge rectangulaire (20), chaque moitié du manchon (16) étant dotée d'au moins une bague d'étanchéité élastique (18) entre la gorge rectangulaire (20) qui contient l'anneau de sûreté (28) et l'extrémité du manchon (16), les dimensions relatives des différentes parties du raccord étant telles que, lors de l'emboîtement d'un élément tubulaire (17) dans le manchon (16), l'anneau de sûreté (28) est appréhendé par le chanfrein (27) de l'extrémité libre (26) de l'élément tubulaire (17), puis est dilaté et engagé enfin, par effet d'élasticité, dans la gorge (21) de l'élément tubulaire (17) lorsque les deux gorges (20-21) du manchon (16) et de l'élément tubulaire (17) se trouvent en vis-à-vis, rendant ainsi le raccord résistant à la traction.

2. Système de raccord suivant la revendication 1, caractérisé en ce que chaque bague d'étanchéité (18) est partiellement insérée dans une gorge (19) de forme appropriée, ménagée à cet effet sur la face interne du manchon (16).

3. Système de raccord suivant l'une quelconque des revendications 1 et 2, caractérisé en ce que le manchon (16) et les éléments tubulaires (17) sont en fibres-ciment.

4. Système de raccord suivant la revendication 3, caractérisé en ce que le manchon (16) et les éléments tubulaires (17) sont en amiante-ciment.

5. Système de raccord suivant l'une quelconque des revendications 1 et 2, caractérisé en ce que le manchon (16) et les éléments tubulaires (17) sont en matière plastique organique.

6. Système de raccord suivant l'une quelconque des revendications 1 et 2, caractérisé en ce que le manchon (16) et les éléments tubulaires (17) sont en plastique renforcé de fibres.

7. Système de raccord suivant la revendication 6, caractérisé en ce que le manchon (16) et les éléments tubulaires (17) sont en polyester renforcé de fibres de verre.

8. Système de raccord suivant l'une quelconque des revendications précédentes, caractérisé en ce que l'anneau de sûreté (28) présente une résistance au cisaillement au moins égale à celle du manchon (16) et des éléments tubulaires (17).

9. Système de raccord suivant l'une quelconque des revendications 1 à 7, caractérisé en ce que l'anneau de sûreté (28) est en acier inoxydable.

10. Système de raccord suivant l'une quelconque des revendications 1 à 7, caractérisé en ce que l'anneau de sûreté (28) est en matière plastique organique.

11. Système de raccord suivant l'une quelconque des revendications 1 à 7, caractérisé en ce que l'anneau de sûreté (28) est en plastique renforcé.

12. Système de raccord suivant l'une quelconque des revendications précédentes, caractérisé en ce que les bagues d'étanchéité élastiques (18) sont en élastomère.

13. Système de raccord suivant la revendication 12, caractérisé en ce que les bagues d'étanchéité élastiques (18) sont en caoutchouc.

## Patentansprüche

1. Dichtes, zugsicheres Verbindungssystem für Rohre mit glatten Enden, umfassend eine im wesentlichen zylindrische Manschette (16), worin über eine Einpassung zwei röhrenförmige Elemente (17) aufgenommen werden, Vorrichtungen, um die Verbindung dicht und zugsicher zu machen, und wenigstens einen Dichtungsring (18), der zwischen der Manschette (16) und den eingepaßten röhrenförmigen Elementen (17) angeordnet ist, wobei jedes röhrenförmige Element (17) an jedem seiner freien Enden (26) mit einer nach außen weisenden Anschrägung (27) versehen und an seiner äußeren Oberfläche (25) nahe seinen freien Enden (26) um den gesamten Umfang mit einer Auskehlung (21) ausgestattet ist, wobei die Auskehlung (21) eine untere Wandung (22) und zwei seitliche Wandungen (23, 24) aufweist, die untere Wandung (22) im wesentlichen glatt ist und parallel der äußeren Oberfläche (25) des röhrenförmigen Elements (17) verläuft, die seitliche Wandung (23), die dem freien Ende (26) des röhrenförmigen Elements (17) am nächsten liegt, senkrecht zur Längsachse des röhrenförmigen Elements (17) steht, die andere seitliche Wandung (24) eine konische Form besitzt, vom unteren Teil (22) der Auskehlung (21) leicht ansteigend bis zur äußeren Oberfläche (25) des röhrenförmigen Elements (17), während beide Hälften der Manschette (16), die bezüglich der Mittelebene (M-M) senkrecht zu deren Achse symmetrisch sind, auf der Innenseite um den gesamten Umfang mit einer rechteckigen Auskehlung (20) versehen sind, deren seitliche Wandungen parallel zu der Mittelebene (M-M) stehen, wobei diese rechteckige Auskehlung (20) einen im Rechtecksschnitt quergeschlitzten Sicherungsring (28) enthält, und dieser Ring, wenn er nicht belastet ist, einen Innendurchmesser aufweist, der kleiner ist als der Innendurchmesser der Manschette (16), und einen Außendurchmesser, der größer ist als der Innendurchmesser der Manschette (16), aber kleiner als der Durchmesser des unteren Teils der rechteckigen Auskehlung (20), wobei jede Hälfte der Manschette (16) zwischen der den Sicherungsring (28) enthaltenden rechteckigen Auskehlung (20) und dem Ende der Manschette (16) mit wenigstens einem elastischen Dichtungsring (18) versehen ist, wobei die relativen Abemessungen der verschiedenen Teile der Verbindung so beschaffen sind, daß bei der Einpassung eines röhrenförmigen Elements (17) in die Manschette (16) der Sicherungsring (28) von der Anschrägung (27) an den freien Enden (26) des röhrenförmigen Elements (17) erfaßt wird, dann aufgrund der Elastizität gedehnt und schließlich in die Auskehlung (21) des röhrenförmigen Elements (17) eingepaßt wird, wenn sich die beiden Auskehlungen (20-21) der Manschette (16) und des röhrenförmigen Elements (17) gegenüberliegen, und somit die Verbindung zugsicher machen.

2. Verbindungssystem nach Anspruch 1, dadurch gekennzeichnet, daß jeder Sicherungsring (18) teilweise in eine Auskehlung (19) mit geeigneter Form eingesetzt wird, die zu diesem Zweck an der Innenseite der Manschette (16) ausgespart ist.

3. Verbindungssystem nach irgendeinem der Ansprüche 1 und 2, dadurch gekennzeichnet, daß die Manschette (16) und die röhrenförmigen Elemente (17) aus Faserzement sind.

4. Verbindungssystem nach Anspruch 3, dadurch gekennzeichnet, daß die Manschette (16) und die röhrenförmigen Elemente (17) aus Asbestzement sind.

5. Verbindungssystem nach irgendeinem der Ansprüche 1 und 2, dadurch gekennzeichnet, daß die Manschette (16) und die röhrenförmigen Elemente (17) aus organischem Kunststoff-Material sind.

6. Verbindungssystem nach irgendeinem der Ansprüche 1 und 2, dadurch gekennzeichnet, daß die Manschette (16) und die röhrenförmigen Elemente (17) aus faserverstärktem Kunststoff sind.

7. Verbindungssystem nach Anspruch 6, dadurch gekennzeichnet, daß die Manschette (16) und die röhrenförmigen Elemente (17) aus glasfaserverstärktem Polyester sind.

8. Verbindungssystem nach irgendeinem der vorstehenden Ansprüche, dadurch gekennzeichnet, daß der Sicherungsring (28) eine Scherfestigkeit besitzt, die derjenigen der Manschette (16) und der röhrenförmigen Elemente (17) mindestens gleichkommt.

9. Verbindungssystem nach irgendeinem der Ansprüche 1 bis 7, dadurch gekennzeichnet, daß der Sicherungsring (28) aus Edelstahl ist.

10. Verbindungssystem nach irgendeinem der Ansprüche 1 bis 7, dadurch gekennzeichnet, daß der Sicherungsring (28) aus organischem Kunststoff-Material ist.

11. Verbindungssystem nach irgendeinem der Ansprüche 1 bis 7, dadurch gekennzeichnet, daß der Sicherungsring (28) aus verstärktem Kunststoff ist.

12. Verbindungssystem nach irgendeinem der vorstehenden Ansprüche, dadurch gekennzeichnet, daß die elastischen Dichtungsringe (18) aus einem Elastomer sind.

13. Verbindungssystem nach Anspruch 12, dadurch gekennzeichnet, daß die elastischen Dichtungsringe (18) aus Kautschuk sind.

## Claims

1. Traction-safe and sealing pipe coupling comprising a substantially cylindrical receiving collar with on both sides an intruding pipe element, means to make the pipe coupling tight and traction-safe, and at least one circular sealing element between the receiving collar and each intruding pipe element, wherein each intruding pipe element (17) has an externally chamfered free end (27) and is fitted on its outer side (25) over the entire circumference with a groove (21) having a bottom wall (22) and two side walls (23, 24), said bottom wall being essentially smooth and parallel to the external surface (25) of the pipe element (17), said side wall (23) which is located closest to the free end (26) of the pipe element (17) being perpendicular to the axis of the pipe element (17) and the other side wall (24) being cone-shaped and slanted starting at the bottom wall (22) towards the outer surface (25) of the pipe element (17), whereas each half of the receiving collar (16) which is symmetrical with respect to a median plane (M-M) perpendicular to its axis has on its inner side a right angled circumferentially running groove (20) whose side walls are parallel to the median plane (M-M), whereby said groove (20) has mounted therein a transversally split safety ring (28) having a rectangular cross-section, said safety ring (28) when at rest having an internal diameter which is smaller than the internal diameter of the collar (16) and an external diameter which is larger than the internal diameter of the collar (16) but smaller than the diameter of the bottom wall of the groove (20), whereas in each half of the receiving collar (16) there is mounted at least one elastic sealing ring (18) between the groove (20) that contains the safety ring (28) and the free end of the collar (16), whereby the relative dimensions of the different parts of the pipe coupling are such that when assembling the pipe element (17) in the collar (16), the safety ring (28) is picked up by the chamfered end (27) of the pipe element (17) and is stretched open and subsequently springs back and snaps into the groove (21) of the pipe element (17) when this groove (21) arrives at the position of the groove (20) in the collar (16), thereby making the connection between the pipe element (17) in the collar (16) traction-safe.

2. Pipe coupling according to claim 1, characterized in that each sealing ring (18) is partially inserted in a groove (19) of suitable shape and provided for this purpose on the inner side of the collar (16).

3. Pipe coupling according to any of claims 1 and 2, characterized in that the collar (16) and the pipe elements (17) are made of fibre-cement.

4. Pipe coupling according to claim 3, characterized in that the collar (16) and the pipe elements (17) are made of asbestos-cement.

5. Pipe coupling according to any of claims 1 and 2, characterized in that the collar (16) and the pipe elements (17) are made of plastic.

6. Pipe coupling according to any of claims 1 and 2, characterized in that the collar (16) and the pipe elements (17) are made of fibre reinforced plastic.

7. Pipe coupling according to claim 6, characterized in that the collar (16) and the pipe elements (17) are made of glass fibre reinforced polyester.

8. Pipe coupling according to any of the preceding claims, characterized in that the safety ring (28) has a shear strength at least equal to the shear strength of the collar (16) as the pipe elements (17).

9. Pipe coupling according to any of claims 1 to 7, characterized in that the safety ring (28) is made of stainless steel.

10. Pipe coupling according to any of claims 1 to 7, characterized in that the safety ring (28) is made of plastic.

11. Pipe coupling according to any of claims 1 to 7, characterized in that the safety ring (28) is made of reinforced plastic.

12. Pipe coupling according to any of the preceding claims, characterized in that the elastic sealing rings (18) are made of an elastomer.

13. Pipe coupling according to claim 12, characterized in that the elastic sealing rings (18) are made of rubber.

*Fig.1.*

*Fig.2.*

*Fig.3.*

*Fig.4.*